# EUROPÄISCHE PATENTSCHRIFT

(11) **EP 1 917 085 B1**
(45) Veröffentlichungstag und Bekanntmachung des Hinweises auf die Patenterteilung: **02.12.2009**
(21) Anmeldenummer: 06778344.9
(22) Anmeldetag: 24.08.2006
(51) Int. Cl.: B01D 29/11, B01D 46/52

(54) **Filterelement**
Filter element
Élément filtrant

(30) Priorität: 25.08.2005 DE 102005040417
(43) Veröffentlichungstag der Anmeldung: 07.05.2008
(73) Patentinhaber: MANN + HUMMEL GMBH, 71638 Ludwigsburg (DE)
(72) Erfinder: KREINER, Anton, 94419 Reisbach (DE)
(86) Internationale Anmeldenummer: PCT/EP2006/065622
(87) Internationale Veröffentlichungsnummer: WO 2007/023174

(56) Entgegenhaltungen:
- EP-A- 1 695 751
- DE-A1- 19 919 289
- GB-A- 1 511 904
- US-A1- 2003 150 552

## Beschreibung

### Technisches Gebiet

Die Erfindung betrifft ein Filterelement mit einer Kunststoffendscheibe nach dem Oberbegriff des Patentanspruchs 1. Ferner betrifft die Erfindung ein Herstellungsverfahren für ein Fittereiement mit einer derartigen Endscheibe nach dem Oberbegriff des Patentanspruchs 7.

### Stand der Technik

Derartige Kunststoffendscheiben haben die Aufgabe, eine meist kreisringförmige Fläche zu bilden, in die ein Filtermedium dichtend eingebettet werden kann. Weiterhin sollte die Kunststoffendscheibe über eine Anschlusskontur verfügen, welche zur Herstellung einer dichten und lösbaren Verbindung zu einem Anschlusselement geeignet ist. Eine solche Endscheibe ist beispielsweise in der DE 199 19 289 offenbart. Hier wird die Herstellung einer Kunststoffendplatte beschrieben, die zum dichten Abschluss mit einem Filtermedium dient. Dazu werden aufeinander gelegte Kunststoffscheiben verwendet, welche unterschiedliche thermische Eigenschaften aufweisen, wodurch diese durch induktive Behandlung selektiv erhitzt werden können.

Die DE 101 06 734 zeigt ein Verfahren zur Herstellung einer Verbindung zwischen einem fluidundurchlässigen Kunststoff und einem fluiddurchlässigen Filtermaterial. Hierbei wird die Kunststoffendscheibe im zu verbindenden Bereich über eine Infrarotwärmequelle plastifiziert, wobei die Infrarotwärmequelle bestimmte vorgegebene technische Merkmale aufweisen muss.

Nachteilig ist bei der ersten Kunststoffendscheibe, dass diese Metallpartikel aufweisen muss, um durch die induktive Wärmequelle erhitzt werden zu können, da diese Art von Kunststoffendscheiben schwieriger zu entsorgen ist. Die Kunststoffendscheibe des zweiten Verfahrens darf keine Pigmente für eine farbige bis schwarze Gestaltung des Materials enthalten, welche Wärme stark absorbieren können. Dieses kann bei einem schnellen und intensiven Erwärmen innerhalb des Kunststoffes zu den Werkstoff zerstörenden exothermen Reaktionen führen. Auch ohne die wärmeabsorbierenden Materialen innerhalb des Kunststoffes darf die Strahlungsintensität, mit der auf den Kunststoff eingewirkt wird, nicht zu hoch sein, da es sonst zu Blasenbildung und Verbrennungen an der Oberfläche des Kunststoffes kommen kann.

Aufgabe der Erfindung ist es daher, ein Filterelement mit einer Kunststoffendscheibe zu schaffen wobei die Endscheibe, einfach und kostengünstig in der Herstellung ist und eine besonders homogene Plastifizierung im Bereich der Fügezone ermöglicht, bei gleichzeitig kurzen Plastifizierungszeiten. Diese Aufgabe wird durch die Merkmale der Patentansprüche 1 und 7 gelöst.

### Offenbarung der Erfindung

Die Kunststoffendscheibe weist zwei im Wesentlichen kreiszylindrische Kunststofflagen auf, wobei eine stirnseitige Kunststofflage der Kunststoffendscheibe mit einem hohlzylindrischen, zickzackförmig gefalteten Filtermedium mittels eines Aufschmelzverfahrens der stirnseitigen Kunststofflage verbindbar ist. Die Kunststofflagen können dabei miteinander verklebt, verschweißt, im 2-Komponenten-Verfahren hergestellt oder auch nur aufeinander gelegt sein. Dabei wird die stirnseitige Kunststofflage plastifiziert und im plastifizierten Zustand auf die Faltehendspitzen des Filtermediums aufgedrückt und dort ausgehärtet. Die Kunststoffendscheibe kann dabei bevorzugt für Flüssigkeitsfilter verwendet werden, es ist jedoch auch möglich, diese für Gasfilter zu verwenden. Des Weiteren ist die stirnseitige Kunststofflage für Infrarotstrahlung oder Wärmestrahlung im Wesentlichen transparent ausgeführt und die direkt dazu benachbarte Kunststofflage für Infrarotstrahlung im Wesentlichen absorbierend ausgeführt. Bei der Bestrahlung mit einer Infrarotquelle wird dabei die stirnseitige Kunststofflage von den Infrarotstrahlen durchdrungen und erwärmt sich durch Anregen der Atome und Moleküle. Ein Großteil der Infrarotstrahlen geht jedoch durch die stirnseitige Kunststofflage hindurch und trifft auf die Grenzschicht zur benachbarten Kunststofflage, wo sie teilweise absorbiert und teilweise reflektiert wird. Die reflektierten Infrarotstrahlen erwärmen wiederum die stirnseitige Kunststofflage von innen heraus. Der Infrarotstrahlenanteil, welcher auf die Grenzschicht zwischen den Kunststofflagen trifft, erwärmt die Grenzschicht im Bereich der benachbarten Kunststofflage. Durch die heiße Grenzschicht entsteht weiterhin eine Wärmeleitung von innen sowohl in die benachbarte Kunststofflage als auch in die stirnseitige Kunststofflage. Die stirnseitige Kunststofflage ist dabei bevorzugt naturfarben bzw. mit licht- oder lasertransparentem Farbstoff eingefärbt. Durch diesen Aufbau der Kunststoffendscheibe wird erreicht, dass die im Aufschmelzvorgang heißeste Stelle im Inneren an der Grenzschicht zwischen stirnseitiger Kunststofflage und benachbarter Kunststofflage der Kunststoffendscheibe liegt und dadurch die stirnseitige Kunststofflage sehr gleichmäßig plastifiziert wird. Dieses ist für die Verschweißung mit den Stirnkanten des Filtermediums von sehr großer Bedeutung. Es kann dadurch eine größere Eindringtiefe und eine bessere Verarbeitbarkeit erzielt werden, wodurch resultierend eine bessere Dichtheit gewonnen wird. Des Weiteren kann die Zykluszeit erheblich verringert werden, da das für Infrarotstrahlung im Wesentlichen transparente Material bei starkem Strahlungseingang nicht zum Blasenbilden neigt und sich die Strahlungsanteile besser in der Kunststoffendscheibe verteilen. Dadurch kann von vorne herein mit einer größeren Strahlungsintensität an den Prozess herangegangen werden, welches zu einer Verkürzung der Prozesszeit führt. Weiterhin liegt die Haupterwärmungszone im Bereich der Grenzschicht, sodass der Rest der benachbarten Kunststofflage formstabil bleibt, welches zu einem besseren Handling führt.

Gemäß einer vorteilhaften Ausgestaltung der Erfindung ist die Kunststoffendscheibe im 2-Komponenten-Spritzgießverfahren aus einem thermoplastischen Kunststoff hergestellt. Dabei wird bevorzugt zuerst die für die Infrarotstrahlung absorbierende Kunststofflage gespritzt und im Anschluss die für die Infrarotstrahlung im Wesentlichen transparente stirnseitige Kunststofflage auf die absorbierende Lage aufgespritzt. Dieses Herstellverfahren ist hinreichend ausgereift und birgt große Vorteile in der Prozesssicherheit.

Dabei ist es vorteilhaft, wenn die stirnseitige Kunststofflage aus einem im Wesentlichen glasfaserfreien Polyamid besteht und die dazu benachbarte Kunststofflage mit den absorbierenden Eigenschaften aus einem glasfaserverstärktem Polyamid, welchem dunkle, wärmeabsorbierende Partikel zugesetzt sind, besteht. Durch die Ausführung der stirnseitigen Kunststofflage mittels eines im Wesentlichen glasfaserfreien Polyamides ergibt sich der Vorteil, dass der Plastifiziervorgang sehr gleichmäßig erfolgen kann und die Verbindung mit den zick-zack-förmig gefalteten Enden des Filtermediums besonders innig sein kann. Die notwendige Stabilität der Kunststoffendscheibe wird dann durch die Ausführung der benachbarten Kunststofflage aus einem glasfaserverstärkten Polyamid gewährleistet.

Gemäß einer vorteilhaften Ausgestaltung der Erfindung weist die stirnseitige Kunststofflage an einem radialen Ende einen axial abstehenden Ringkragen auf. Dieser kann am äußeren radialen Ende oder am inneren radialen Ende der stirnseitigen Kunststofflage angeordnet sein. Der Ringkragen erstreckt sich dabei axial vom Filtermedium weg und bildet eine Dichtkontur zu einem korrespondierenden Dichtgegenpart aus. Der Dichtgegenpart kann dabei ein gehäuseseitiges oder elementseitiges Mittelrohr oder auch ein gehäuseseitiger Anlagestutzen sein. Die Dichtkontur wird dabei einstückig aus dem Ringkragen herausgebildet.

Es ist weiterhin möglich, dass die der stirnseitigen Kunststofflage benachbarte Kunststofflage weiterhin ein Funktionselement, insbesondere einen Flüssigkeitsablauf, bildet. Die der stirnseitigen Kunststofflage benachbarte Kunststofflage ist die dem Filtermedium abgewandte Seite der Kunststoffendscheibe, wobei es hierdurch möglich ist, dass diese Kunststofflage auch der Zentrierung und Fixierung des Filterelements in einem Gehäuse dient oder eine Durchgangsöffnung und ein Gewinde für eine Ablaufschraube bildet.

Gemäß einer vorteilhaften Weiterbildung der Erfindung weist die der stirnseitigen Kunststofflage zugewandte Seite der benachbarten Kunststofflage eine oberflächenvergrößernde Reliefkontur auf. Dies kann beispielsweise in Form einer Schallplattenkontur oder in Form einer umlaufenden Wellen- oder Sägezahnlinie erfolgen. Da die beiden Kunststofflagen im 2-Komponenten-Verfahren hergestellt sind, weist dementsprechend die stirnseitige Kunststofflage das dazu korrespondierende Oberflächenprofil auf. Durch die Vergrößerung der Oberfläche mittels der oberflächenvergrößernden Reliefkontor ergibt sich eine noch bessere Wärmeeinbringung durch die Infrarotstrahlung in die Grenzschicht zwischen den beiden benachbarten Kunststofflagen, sodass sich hierdurch die Prozesszeit weiterhin signifikant verringert.

Für die Herstellung eines Filterelementes in Verbindung mit der Kunststoffendscheibe wird in einem ersten Schritt die erste für Infrarotstrahlung im Wesentlichen transparente Kunststofflage mittels einer Infrarotstrahlungsquelle durchstrahlt. Die Infrarotstrahlungsquelle kann hierbei ein Laser oder ein Infrarotstrahler sein. Die Infrarotstrahlen durchdringen die erste stirnseitige, im Wesentlichen transparente Kunststofflage und treffen auf die zweite für Infrarotstrahlung im Wesentlichen absorbierende Kunststofflage. An der Grenzschicht zwischen den beiden Kunststofflagen entsteht durch die Absorption der Infrarotstrahlung eine große Hitze oberhalb der Schmelztemperatur, wodurch die Grenzschicht zu plastifizieren beginnt. Durch die Abstrahlung der Infrarotstrahlung an der Grenzschicht und eine geringfügige Aufheizung der im Wesentlichen transparenten Kunststofflage beim Durchstrahlen wird diese von innen nach außen gleichmäßig und homogen plastifiziert. In einem zweiten Schritt wird die Infrarotstrahlungsquelle entfernt und die nebeneinander liegenden Stirnkanten eines zick-zack-förmig gefalteten fluiddurchlässigen Filtermaterials werden in den noch aufgeschmolzenen, plastifizierten Bereich der ersten Kunststofflage eingedrückt. Diese Position wird solange gehalten, bis eine feste Verbindung der Stirnkanten des Filtermaterials mit dem Kunststoff in der Eindrückposition erreicht wird. Durch die besondere Ausgestaltung der Kunststoffendscheibe kann hier mit einer hohen Strahlungsintensität der Infrarotstrahlungsquelle gearbeitet werden, so dass sich außerordentlich kurze Zykluszeiten ergeben.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Ereindung und auf anderen Gebieten verwirklicht sein und vorteilhafte sowie für sich schutzfähige Ausführungen darstellen können, für die hier Schutz beansprucht wird.

### Kurze Beschreibung der Zeichnungen

Weitere Einzelheiten der Erfindung werden in der Zeichnung anhand von schematischen Ausführungsbeispielen beschrieben. Hierbei zeigt
- Figur 1: einen Flüssigkeitsfilter im Schnitt und
- Figur 2: eine Vergrößerung der Kunststoffendscheibe in einer Detaildarstellung.

### Ausführungsform(en) der Erfindung

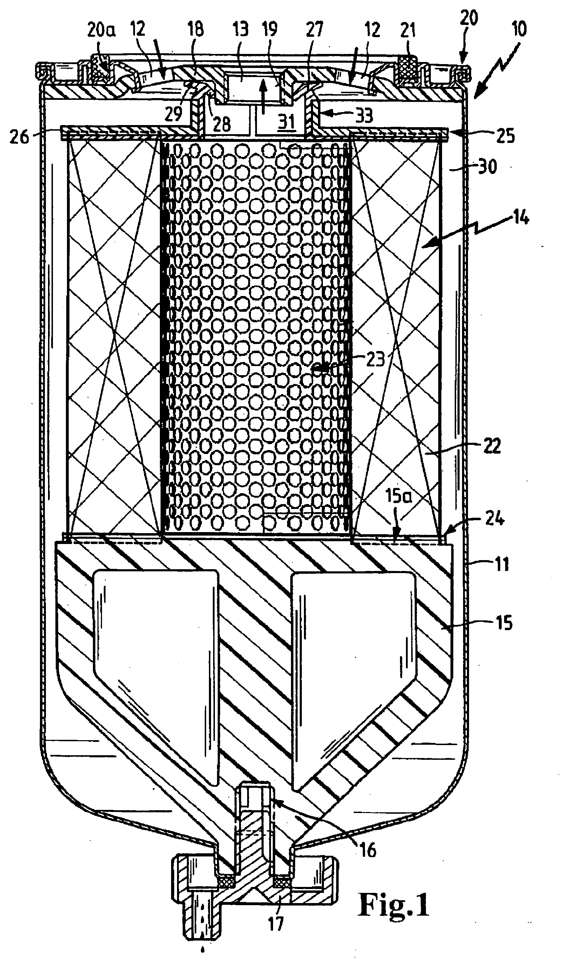

Die Figur 1 zeigt einen Flüssigkeit 10, insbesondere Kraftstofffilter, mit einem becherförmigen Gehäuse 11, welches einen Einlass 12 und einen Auslass 13 aufweist. Dabei ist der Auslass 13 zentral auf der Stirnseite des becherförmigen Gehäuses 11 angeordnet, und der Einlass 12 ist konzentrisch auf mehrere Öffnungen verteilt um den Auslass 13 herum angeordnet. Im Inneren des becherförmigen Gehäuses 11 ist ein Filterelement 14 angeordnet, welches dichtend eine Rohseite 30 von einer Reinseite 31 trennt. Im unteren Bereich des becherförmigen Gehäuses 11 wird das Filterelement 14 durch ein Bodenstück 15 axial im Gehäuse 11 gehalten. Das Bodenstück 15 weist eine Auflage für das Filterelement 14 auf sowie ein Innengewinde 16, welches am Fuß des becherförmigen Gehäuses eine Aufnahme für eine Ablassschraube 17 bildet. Bei der Verwendung des Flüssigkeitsfilters 10 als Kraftstofffilter- speziell Dieselkraftstofffilter - sammelt sich im unteren Bereich des becherförmigen Gehäuses 11 das gegenüber dem Kraftstoff schwerere Wasser, welches dann durch die Ablassschraube 17 aus dem becherförmigen Gehäuse 11 abgelassen werden kann. Das becherförmige Gehäuse 11 wird durch eine metallische Deckelplatte 18 verschlossen. Diese Deckelplatte 18 weist eine zentrisch angeordnete Gewindeaufnahme 19 auf, welche einen hier nicht dargestellten Gewindestutzen eines Gegenparts, wie z. B. ein Kraftstoffmodul oder auch einen Zylinderblock, aufnimmt. Die Deckelplatte 18 wird mit der Gehäusewandung des becherförmigen Gehäuses 11 über ein Halteblech 20 gehalten, wobei das Halteblech 20 einerseits mit dem becherförmigen Gehäuse 11 über eine Bördelung dicht und unlösbar verbunden ist, und andererseits die Deckelplatte 18 über einen Falz ebenfalls dicht aufnimmt. In der Deckelplatte 18 sind weiterhin die Ein- bzw. Auslassöffnungen 12, 13 des Flüssigkeitsfilters angeordnet. Das Halteblech 20 weist axial außen eine umlaufende Nut zur Aufnahme einer Dichtung 21 auf, welche zur Abdichtung des Flüssigkeitsfilters 10 gegenüber dem Gegenpart dient. Das Filterelement weist ein hohlzylindrisch angeordnetes, bevorzugt zickzackförmig gefaltetes Filtermedium 22 aus einem Filterpapier oder einem Filtervlies oder einem Synthetikmaterial oder einer Mischung aus allem auf, welches durch ein innenliegendes Stützrohr 23 gegen ein Kollabieren gestützt wird. Das Filterelement 14 wird unten abgeschlossen durch eine geschlossene untere Endscheibe 24, welche aus einem thermoplastischen Material ist, welches für Infrarotstrahlung im Wesentlichen transparent ist. Die Endscheibe 24 ist über ein Infrarotschweißverfahren mit dem Bodenstück 15 verschweißt, welches im Wesentlichen absorbierend für Infrarotstrahlung ist. Es ist jedoch auch eine abschließende Nitrilkautschukendscheibe denkbar, welche auf dem Bodenstück 15 aufliegt oder mit diesem über ein Klebverfahren verbunden ist. Auf der gegenüberliegenden Stirnseite weist das Filterelement 14 eine offene Endscheibe 25 auf, welche einen Endscheibenanteil 26 und einen Dichtungsanteil 27 aufweist. Der Dichtungsanteil 27 liegt in Form eines sich axial vom Filtermedium weg erstreckenden Ringkragens 33 vor. Dieser mündet in eine Art T-Stück, wobei das eine Ende des T eine Radialdichtung 28 gegenüber einer vertikal umlaufenden Kante der Deckelplatte 18 darstellt und das gegenüberliegende Ende des T-Stückes des Dichtungsanteils 27 axial an einer horizontalen Anlagefläche der Deckelplatte 18 anliegt. Dadurch ergibt sich zum einen eine axiale Abdichtung und zum anderen über eine gewisse axiale Verpressung eine daraus resultierende bessere Radialdichtwirkung an der Radialdichtung 28 über eine geringfügige Verdrehung des T-förmigen Schenkels des Ringkragens 33.

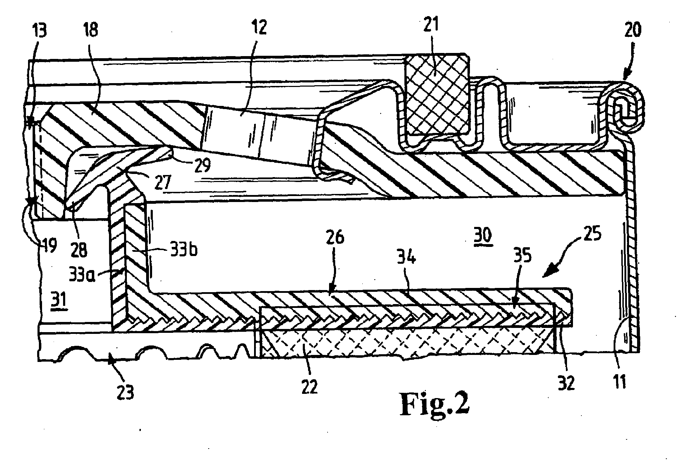

Die Figur 2 zeigt eine Vergrößerung im Bereich der Kunststoffendscheibe. Der vorherigen Figur entsprechende Bauteile sind mit den gleichen Bezugszeichen versehen. Hier ist der zweilagige Aufbau der Kunststoffendscheibe 25 deutlich zu erkennen. Die dem Filtermedium 22 zugewandte Stirnseite weist eine für Infrarotstrahlung transparente Kunststofflage 32 auf, welche das Filtermedium 22 vollständig aufnimmt. Die transparente Kunststofflage 32 weist im radial inneren Bereich einen Ringkragen 33a auf, welcher in einen Dichtungsanteil 27 weitergeführt wird. Mit der transparenten Kunststofflage 32 verbunden ist eine absorbierende Kunststofflage 34, welches an ihrem radial inneren Ende ebenfalls einen Ringkragen 33b aufweist, welcher korrespondierend zur Form des Ringkragens 33a geformt ist, und diesen formstabil unterstützt. An der Grenzfläche zwischen transparenter Kunststofflage 32 und absorbierender Kunststofflage 34 ist eine Sägezahnkontur 35 angeordnet. Diese dient der besseren Absorption und Reflexion der die transparente Kunststofflage 32 durchdringende Infrarotstrahlung, so dass der Plastifizierungsprozess im Bereich der Grenzschicht schneller erfolgt.

## Patentansprüche

1. Filterelement, vorzugsweise für einen Flüssigkeitsfilter, aufweisend ein hohlzylindrisches zickzackförmig gefaltetes Filtermedium und eine Kunststoffendscheibe mit wenigstens zwei Kunststofflagen, wobei die erste Kunststofflage für Infrarot- oder Wärmestrahlung im Wesentlichen transparent und die dazu benachbarte zweite Kunststofflage für Infrarotstrahlung im Wesentlichen absorbierend ausgeführt ist, **dadurch gekennzeichnet, dass** die erste Kunststofflage mittels eines Aufschmelzverfahrens, mit welchem die erste Kunststofflage von innen heraus erwärmbar ist, plastifizierbar und mit dem Filtermedium verbunden ist.

2. Filterelement nach Anspruch 1, **dadurch gekennzeichnet, dass** die Kunststoffendscheibe im 2-Komponenten-Verfahren aus einem thermoplastischen Kunststoff im Spritzgießverfahren hergestellt ist.

3. Filterelement nach Anspruch 2, **dadurch gekennzeichnet, dass** die erste Kunststofflage aus einem im Wesentlichen glasfaserfreien Polyamid besteht und die benachbarte Kunststofflage aus einem glasfaserverstärkten Polyamid, welchem dunkle wärmeabsorbierende Partikel zugesetzt sind, besteht.

4. Filterelement nach einem der vorhergehenden Ansprüche, **dadurch gekennzeichnet, dass** die erste Kunststofflage an einem radialen Ende einen axial abstehenden Ringkragen aufweist, wobei der Ringkragen eine Dichtkontur zu einem korrespondierenden Dichtgegenpart bildet.

5. Filterelement nach einem der Ansprüche 1 bis 3, **dadurch gekennzeichnet, dass** die der ersten Kunststofflage benachbarte zweite Kunststofflage weiterhin ein Funktionselement, insbesondere einen Flüssigkeitsablauf, bildet.

6. Filterelement nach einem der vorhergehenden Ansprüche, **dadurch** gekenntzeichnet, dass die der ersten Kunststofflage zugewandte Seite der benachbarten zweiten Kunststofflage eine oberflächenvergrößernde Reliefkontur aufweist.

7. Verfahren zur Herstellung eines Filterelementes mit einer festen, dichten Verbindung zwischen nebeneinander liegenden Stirnkanten eines zickzackförmig gefalteten, fluiddurchlässigen Filtermaterials und einer Kunststoffendscheibe, wobei die Kunststoffendscheibe zwei im Wesentlichen plattenförmige Kunststofflagen aufweist, **dadurch gekennzeichnet, dass** in einem ersten Schritt die erste für Infrarotstrahlung im Wesentlichen transparente Kunststofflage mittels einer Infrarotstrahtungsquelle durchstrahlt wird, wobei die Infrarotstrahlung in der zweiten für Infrarotstrahlung im Wesentlichen absorbierende Kunststofflage absorbiert wird und einen Teil der zweiten Kunststoffilage und die erste Kunststofflage vollständig aufschmelzt, in einem zweiten Schritt die Infrarotstrahlungsquelle entfernt wird, in einem dritten Schritt die Stirnkanten des Filtermaterials in den noch aufgeschmolzenen Bereich der ersten Kunststofflage eingedrückt werden und in einem vierten Schritt das eingedrückte Filtermaterial bis zur Ausbildung einer festen Verbindung mit dem Kunststoff in der Eindrückposition gehalten wird.

## Claims

1. Filter element, preferably for a liquid filter, featuring a hollow cylindrical fanfold filter medium,and a plastic end plate with at least two plastic layers, the first plastic layer being basically transparent for infrared or thermal radiation and the adjacent second plastic layer being basically absorbent for infrared radiation, **characterized in that** the first plastic layer is plasticizable and connected with the filter medium by means of a melting process which allows heating up the first plastic layer from the inside.

2. Filter element according to claim 1, **characterized in that** the plastic end plate is manufactured in the two-component process from a thermoplastic material in the injection molding process.

3. Filter element according to claim 2, **characterized in that** the first plastic layer consists of a basically fiberglass-free polyamide and the adjacent plastic layer of a fiberglass-reinforced polyamide to which heat-absorbent particles are added.

4. Filter element according to one of the above mentioned claims, **characterized in that** the first plastic layer features at is radial end an axially protruding annular collar, the annular collar forming a sealing contour in relation to a corresponding sealing counterpart.

5. Filter element according to one of the claims 1 to 3, **characterized in that** the second plastic layer which is adjacent to the first plastic layer still forms a functional component, in particular a liquid discharge.

6. Filter element according to one of the above-mentioned claims, **characterized in that** the side of the adjacent second plastic layer facing the first plastic layer features a surface-enlarging relief contour.

7. Method for manufacturing a filter element with a solid, tight connection between adjacent front edges of a fanfold fluid-permeable filter material and a plastic end plate, the plastic end plate featuring two basically plate-shaped plastic layers, **characterized in that** in a first step the first plastic layer which is transparent for the infrared radiation is irradiated by means of an infrared radiation source, the infrared radiation being absorbed in the second plastic layer which is basically absorbent for infrared radiation and melting one part of the second plastic layer and completely melting the first plastic layer, that in a second step the infrared radiation source is removed, that in a third step the front edges of the filter material are pressed into the still melted area of the first plastic layer, and that in a fourth step the pressed filter material remains in this position until a solid connection is realized with the plastic.

## Revendications

1. Elément filtrant, de préférence pour un filtre à liquide, présentant un milieu filtrant cylindrique creux en forme d'accordéon et une plaque d'extrémité en matière plastique avec au moins deux couches plastiques, la première couche plastique pour le rayonnement infrarouge ou thermique étant essentiellement transparente et la seconde couche plastique contiguë pour rayonnement infrarouge étant essentiellement absorbante, **caractérisé en ce que** la première couche plastique peut être plastifiée et reliée au milieu filtrant par un procédé de fusion au moyen duquel la première couche plastique peut être chauffée depuis l'intérieur.

2. Elément filtrant selon la revendication 1, **caractérisé en ce que** la plaque d'extrémité en matière plastique est moulé par injection selon un procédé bi-composants à partir d'une matière plastique thermoplastique.

3. Elément filtrant selon la revendication 2, **caractérisé en ce que** la première couche plastique est faite d'un polyamide essentiellement exempt de fibres de verre et la couche plastique contiguë est faite d'un polyamide renforcé par des fibres de verre auquel sont additionnées des particules absorbant la chaleur.

4. Elément filtrant selon l'une des revendications précédentes, **caractérisé en ce que** la première couche plastique présente à une extrémité radiale une collerette annulaire en saillie, la collerette annulaire formant un contour d'étanchéité avec le contre-élément d'étanchéité correspondant.

5. Elément filtrant selon l'une des revendications 1 à 3, **caractérisé en ce que** la seconde couche plastique contiguë à la première couche plastique forme par ailleurs un élément fonctionnel, notamment un écoulement de liquide.

6. Elément filtrant selon l'une des revendications précédentes, **caractérisé en ce que** le côté de la seconde couche plastique contiguë dirigé vers la première couche plastique présente un contour en relief qui agrandit la surface.

7. Procédé de fabrication d'un élément filtrant avec un assemblage solide et étanche entre les arêtes frontales adjacentes d'un matériau filtrant plié en accordéon et perméable aux fluides et une plaque d'extrémité en matière plastique, la plaque d'extrémité en matière plastique présentant deux couches plastiques essentiellement en forme de plaque, **caractérisé en ce que**, lors d'une première étape, la première couche plastique transparente pour le rayonnement infrarouge est traversée par un rayon d'une source de rayonnement infrarouge, le rayonnement infrarouge étant absorbé dans la seconde couche plastique pour rayonnement infrarouge essentiellement absorbante, et fait fondre une partie de la seconde couche plastique et l'intégralité de la première couche plastique ; que, lors d'une deuxième étape, la source de rayonnement infrarouge est éloignée ; que, lors d'une troisième étape, les arêtes frontales du matériau filtrant sont pressées dans la zone encore en fusion de la première couche plastique ; et que, lors d'une quatrième étape, le matériau filtrant enfoncé est maintenu en position enfoncée jusqu'à ce que l'assemblage avec la matière plastique soit solide.
